# EUROPEAN PATENT APPLICATION

(11) **EP 4 790 586 A1**
(43) Date of publication of application: **12.08.2026**
(21) Application number: 26155039.6
(22) Date of filing: 29.01.2026
(51) Int. Cl.: G06F 40/284, G06F 40/30, G06F 40/35, G06F 40/56

(54) **NEAR REAL-TIME LANGUAGE MODEL INTERACTION**

(30) Priority: 06.02.2025 US 202519047558
(71) Applicant: Microsoft Technology Licensing, LLC, Redmond, WA 98052 (US)
(72) Inventor: WOULFE, Muiris, Redmond, Washington, 98052 (US); MUTHUKUMAR, Poornima, Redmond, Washington, 98052 (US); ATASEVEN, Emre, Redmond, Washington, 98052 (US); AYDEMIR, Ata Taner, Redmond, Washington, 98052 (US); POLYVANYI, Ievgen, Redmond, Washington, 98052 (US)
(74) Representative: CMS Cameron McKenna Nabarro Olswang LLP

(57) **Abstract**

Solutions disclosed herein provide for near real-time language model interaction. Efficient management of the historical state reduces token counts in prompts, enabling use of (near) real-time invocation of language models. Examples segment a transcript (or other streaming representation) of a conversation into an earlier portion for summarization and a later portion. The summary and later portion are included in a prompt for the language model, along with an instruction to return an update to a real-time contextual analysis product (e.g., an updated agenda or other data product) based on prompt. Using the summary, or a sliding time window, the token count in the prompt is reduced, enabling a more rapid cadence of updates. The update is provided as an output (e.g., an agenda update or an updated summary of the conversation), and updated summary may be efficiently used as the summary in the following prompt (i.e., the next update iteration).

## Description

### BACKGROUND

Modern language models, such as large language models (LLMs), small language models (SLMs), and multimodal language models (MLMs), generally rely on a chat-style interaction in which a user inputs a prompt (e.g., a query) to a language model, which processes the prompt to generate a response. While this chat-style interaction may be effective for many use-cases, it is not suitable for applications that require real-time data processing. For example, LLMs designed to augment live teleconferencing (e.g., voice/video/chat meetings between live participants) may be required to process data continuously and deliver results in near real-time.

In a specific example, an LLM application may augment a live teleconference by providing a contemporaneous summary of the transcript and/or by tracking the meeting's status as the live teleconference progresses, such as by automatically updating an agenda. However, repetitiously processing the entire, growing transcript as the live teleconference progresses becomes computationally infeasible. This is because the token count in the prompt grows until it is too computationally expensive for the LLM to process.

### SUMMARY

The disclosed examples are described in detail below with reference to the accompanying drawing figures listed below. The following summary is provided to illustrate some examples disclosed herein.

Solutions disclosed herein provide for efficient near real-time language model interaction. Examples, on a scheduled cadence: receive current streamed data (e.g., a transcript) of a conversation; identify a current end point of the current streamed data; determine a current segmentation point in the current streamed data, wherein the current segmentation point segments the current streamed data into a pre-segmentation portion and a post-segmentation portion, wherein the pre-segmentation portion comprises the current streamed data prior to the current segmentation point and the post-segmentation portion comprises the current streamed data following the current segmentation point up through the current end point; generate a language model prompt for a language model, wherein the language model prompt comprises: a current summary of the pre-segmentation portion, a copy of the post-segmentation portion, an instruction to return an update to a contextual analysis product, and an instruction to return a current updated summary of the conversation using both the current summary of the pre-segmentation portion and the copy of the post-segmentation portion; and update the contextual analysis product using the returned update to the contextual analysis product or display the current updated summary; wherein the current segmentation point in the current streamed data comprises a prior end point of a prior streamed data from a prior iteration of updating the contextual analysis product, and the current summary of the pre-segmentation portion comprises a prior updated summary from the prior iteration of updating the contextual analysis product; and wherein in a following iteration of updating the contextual analysis product, the current end point of the current streamed data becomes a following segmentation point and the current updated summary becomes a following summary of the pre-segmentation portion.

### BRIEF DESCRIPTION OF THE DRAWINGS

The disclosed examples are described in detail below with reference to the accompanying drawing figures listed below:
FIG. 1 illustrates an example architecture that advantageously provides for near real-time language model interaction;
FIG. 2 illustrates how various data sets and values, used in examples of the architecture of FIG. 1, relate across iterations of updating data products;
FIG. 3 illustrates further detail for the exemplary real-time conversation aid of the architecture of FIG. 1;
FIG. 4 illustrates an exemplary language model prompt, as may be used in examples of the architecture of FIG. 1;
FIG. 5 shows a flowchart illustrating exemplary operations that may be performed when using example architectures, such as the architecture of FIG. 1; and
FIG. 6 shows a block diagram of an example computing device suitable for implementing some of the various examples disclosed herein.

Corresponding reference characters indicate corresponding parts throughout the drawings.

### DETAILED DESCRIPTION

Solutions disclosed herein provide for near real-time language model interaction. Efficient management of the historical state reduces token counts in prompts, enabling the use of real-time rather than turn-by-turn invocation of language models. Examples segment real-time data input, such as a transcript of a conversation or other streamed data, into time-segmented portions, such as an earlier portion for summarization and a later portion. The summary and the later portion are included in a prompt for the language model (and furnished to a summarization algorithm, in some examples), along with an instruction to return an update based on the prompt. Using the summary, or a sliding time window, the token count in the prompt is reduced, enabling a more rapid cadence of updates. The update is provided as a real-time data input, such as an update to a displayed agenda, a summary of the conversation (which may also be used in a subsequent prompt), a sentiment analysis, and/or another contextual analysis product.

Aspects of the disclosure solve multiple problems that are necessarily rooted in computer technology, such as permitting more rapid cadence of using language models (e.g., large language models (LLMs), small language models (SLMs), multimodal language models (MLMs), generative AI models, and any other type of language model). This significantly improves the use of computers for near real-time language processing tasks, such as updating a conversation agenda and/or providing more timely summaries of conversations, for example. In one specific example, with the techniques described herein, an LLM is able to continuously process live teleconference transcripts in real time (or near-real time, such as on the order of seconds per iteration). The following description and corresponding drawings utilize the term "LLM" for illustrative purposes to explain aspects of the disclosure, however, it should be understood that this is not intended to limit aspects of the disclosure to any one type of language model and that any type of language model or generative AI model may be contemplated by the description and various examples herein.

The various examples will be described in detail with reference to the accompanying drawings. Wherever preferable, the same reference numbers will be used throughout the drawings to refer to the same or like parts. References made throughout this disclosure relating to specific examples and implementations are provided solely for illustrative purposes but, unless indicated to the contrary, are not meant to limit all examples.

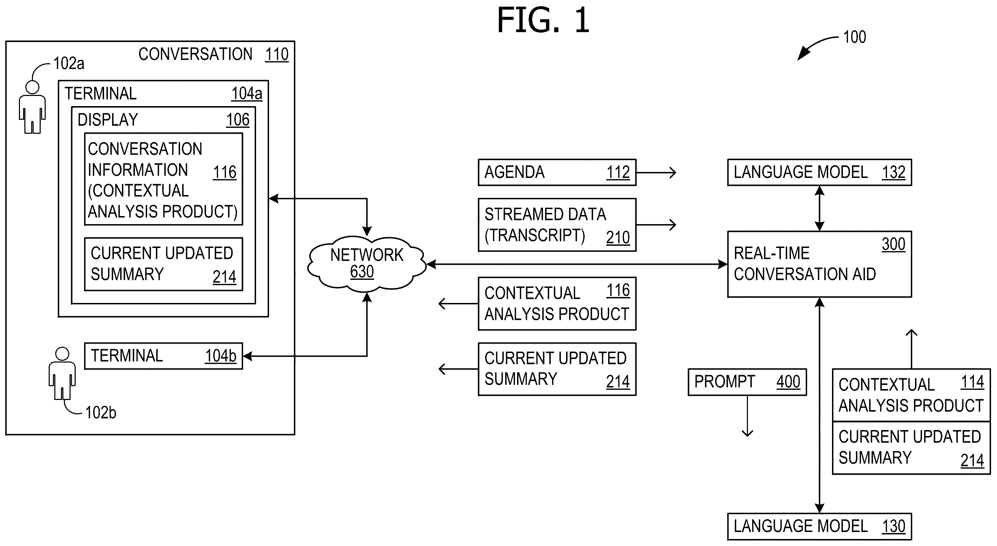

FIG. 1 illustrates an example architecture 100 that advantageously provides for near real-time language model interaction. In this example, near real-time language model interaction is used to dynamically produce a contextual analysis product. One example of a contextual analysis product is an update to an agenda related to a real-time conversation. An agenda may be, for example and without limitation, a meeting agenda, an outline, a list of executables, a program plan, or another format.

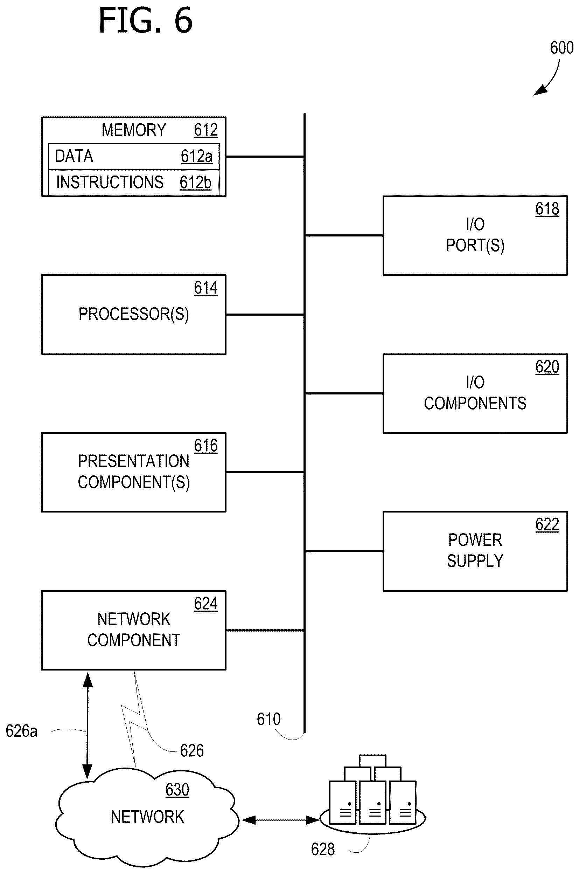

Two participants, a participant 102a and a participant 102b, are engaging in a conversation 110, which may be an audio conversation such as a teleconference, a video conversation such as a video conference, a video being viewed, or a textual conversation such as a real-time chat session. Participant 102a is using a user terminal 104a and participant 102b is using a user terminal 104b. User terminals 104a and 104b may be any type of computational equipment (see FIG. 6), such as personal computers, smartphones, and/or other teleconferencing equipment, and are connected over a computer network 630, which is shown in further detail in FIG. 6. Although conversation 110 is an abstraction, it is shown in FIG. 1 as encompassing user terminals 104a and 104b and participants 102a and 102b.

In some examples, an agenda 112 for conversation 110, which may be a textual document with agenda items in a natural language (NL) form is provided. Some examples may not use agenda 112. As is described herein, as conversation 110 progresses, a real-time conversation aid 300, which uses one or more language models capable of NL processing, receives copies of current streamed data 210 of conversation 110 (e.g., on some timely schedule), and processes current streamed data 210 to determine where, within agenda 112, conversation 110 is. In this example, current streamed data 210 is a current transcript of conversation, such as may be produced using an automatic speech recognition (ASR) tool, although other formats of representing conversation 110 may instead be used.

Real-time conversation aid 300 then provides a contextual analysis product 116 (e.g., an updated agenda or other metadata) to user terminals 104a and 104b. Conversation information, such as metadata about conversation 110 (drawn from contextual analysis product 116) is displayed on at least a display 106 of user terminal 104a. To update an agenda, a language model identifies which agenda items on an agenda have already been addressed in the transcript, using a contextual comparison. Addressed items are marked as complete, or with some other indication of progress.

Examples of contextual analysis product 116 include summaries, sentiment analysis, concept tracking, contextual assistance, and compliance monitoring. These are updated dynamically. Summaries, which may be detailed, or brief, or bulleted,); concept tracking tracks discussion of concepts, similar to agenda items but not explicitly stated; sentiment analysis informs a meeting organizer as to participant satisfaction; compliance monitoring ensures that organization policies are followed by issuing warnings when needed; and contextual assistance provides real-time suggestions such as surfacing documents or other items relevant to the topic being discussed. Contextual analysis product 116 effectively processes the content of conversation 110 (agenda, key words, contextual assistance) to automatically provide a relevant data product.

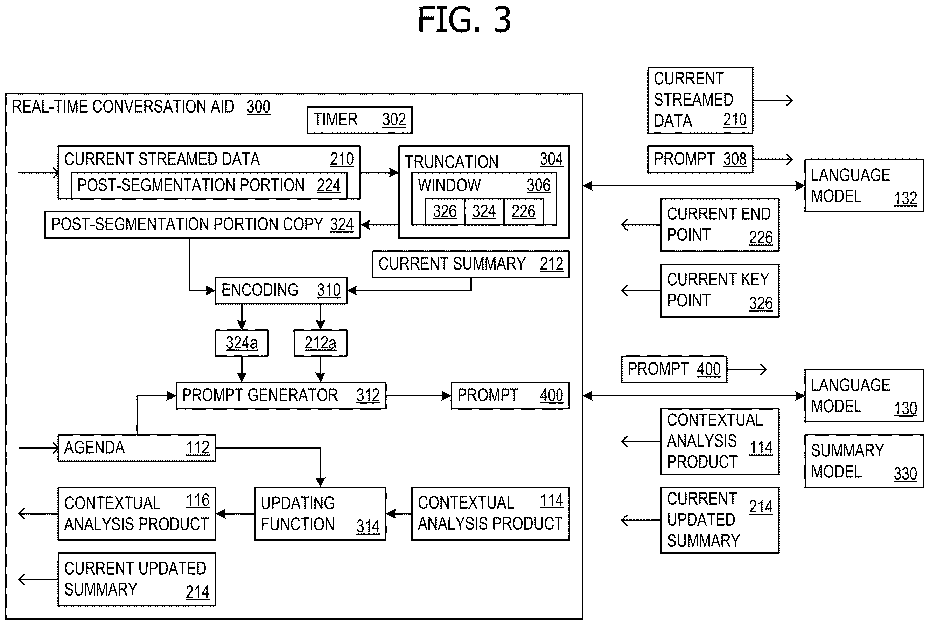

Alternatively, or additionally, real-time conversation aid 300 also provides a current updated summary 214 of current streamed data 210. Using the techniques described herein, real-time conversation aid 300 is able to perform the processing and provide contextual analysis product 116 and/or current updated summary 214 in near real-time, with a refresh rate measurable in seconds (e.g., 10 seconds or less, in some examples). Real-time conversation aid 300 may comprise an automated prompt engineer (APE) to generate language model prompts in support of the processing performed by its language models, and is shown in further detail in FIG. 3.

At the outset of conversation, or sometime prior, one of user terminals 104a or 104b provides agenda 112 to real-time conversation aid 300 over computer network 630. Then, during conversation 110 one of user terminals 104a or 104b provides current streamed data 210 at least as often as the update schedule (refresh rate) for contextual analysis product 116 and/or current updated summary 214. In some examples, contextual analysis product 116 comprises an updated version of agenda 112.

In response, at a selected cadence (i.e., update schedule, refresh rate) real-time conversation aid 300 transmits contextual analysis product 116 and/or current updated summary 214 back over computer network 630. In support of this processing, real-time conversation aid 300 of computer network 630 uses a language model 130. Real-time conversation aid 300 generates and sends a language model prompt 400 to language model 130 with instructions and data necessary for language model 130 to generate and return a contextual analysis product update 114 (e.g., an update to contextual analysis product 116, such as an agenda update for agenda 112) and current updated summary 214. Some examples use a summarization algorithm to generate current updated summary 214, rather than language model 130.

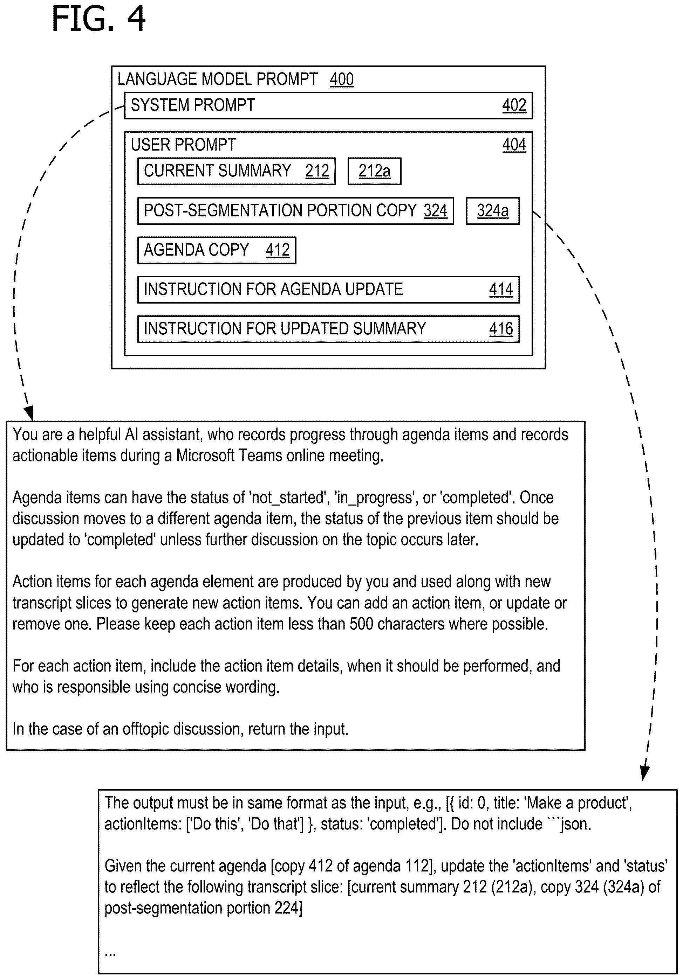

Current updated summary 214 is forwarded to user terminals 104a and 104b, and contextual analysis product update 114 is used to generate contextual analysis product 116, which is then sent to user terminals 104a and 104b. Language model prompt 400 is shown in further detail in FIG. 4. Either or both of language model 130 and language model 132 may comprise an LLM and/or execute on a computing platform that includes an example of computing device 600 of FIG. 6.

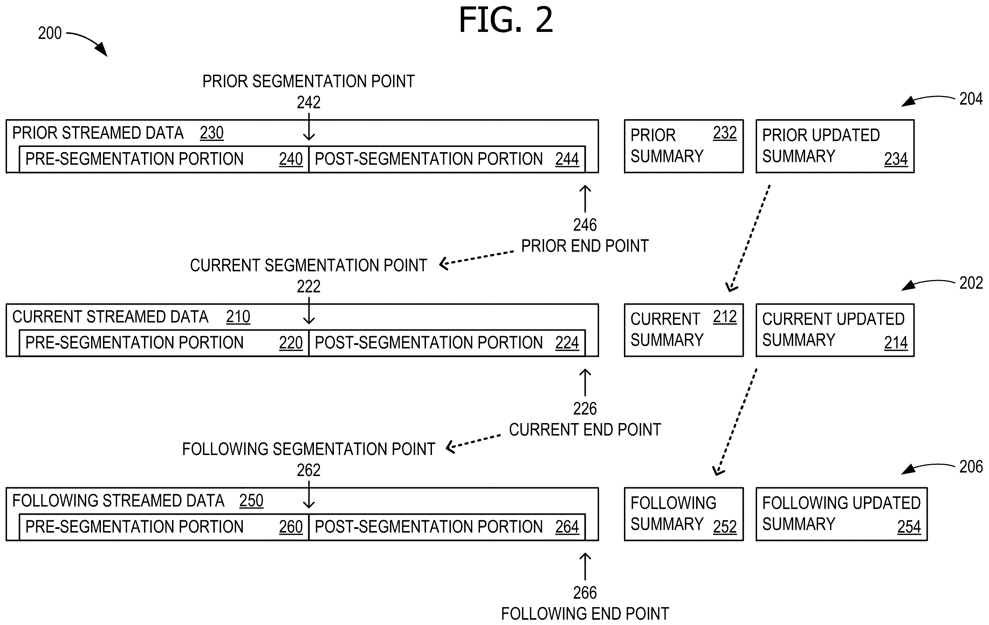

FIG. 2 shows a comparison 200, illustrating how various data sets and values, used in architecture 100, relate across iterations of updating current updated summary 214 and generating contextual analysis product update 114. Three iterations of update cycles are represented: a current iteration 202, a prior iteration 204 (immediately prior), and a following iteration 206 (immediately after). In current iteration 202, current streamed data 210 is segmented into two sections, a pre-segmentation portion 220 and a post-segmentation portion 224. A current segmentation point 222 is the dividing point. That is, current segmentation point 222 segments current streamed data 210 into pre-segmentation portion 220 and post-segmentation portion 224. Pre-segmentation portion 220 thus comprises current streamed data 210 prior to current segmentation point 222, and post-segmentation portion 224 comprises current streamed data 210 following current segmentation point 222 up through current end point 226.

A current end point 226 marks the end of current streamed data 210, which is also the end of post-segmentation portion 224. In some examples, current end point 226 is not selected at an exact pre-determined time cut-off, but instead is selected to be the end of a sentence or set of related sentences. This is also the case for the end points of the other iteration cycles. This is described further in relation to FIG. 3.

A current summary 212 is also used in current iteration 202, such as included in language model prompt 400 that is sent to language model 130, and results in the return of current updated summary. Current summary 212 is a summarization of pre-segmentation portion 220 of current streamed data 210. The source of current summary 212 is described below.

Similarly, a prior streamed data 230 (e.g., a prior transcript), of prior iteration 204, is segmented into its own pre-segmentation portion 240 and post-segmentation portion 244, using a prior segmentation point 242, and having a prior end point 246. Prior iteration 204 has a prior summary 232 and a prior updated summary 234. A following streamed data 250 (e.g., a subsequent transcript), of following iteration 206, is segmented into its own pre-segmentation portion 260 and post-segmentation portion 264, using a following segmentation point 262, and having a following end point 266. Following iteration 206 has a following summary 252 and a following updated summary 254.

Just as current summary 212 is a summarization of pre-segmentation portion 220 of current streamed data 210, prior summary 232 is a summarization of pre-segmentation portion 240 of prior streamed data 230, and following summary 252 is a summarization of pre-segmentation portion 260 of following streamed data 250. In this way, during prior iteration 204, conversation 110 may be described using the combination of prior summary 232 with post-segmentation portion 244 (in which prior summary 232 represents prior streamed data 230 before prior segmentation point 242 and post-segmentation portion 244 is prior streamed data 230 verbatim after segmentation point 242). Likewise, during current iteration 202, conversation 110 may be described using the combination of current summary 212 with post-segmentation portion 224, and during following iteration 206, conversation 110 may be described using the combination of following summary 252 with post-segmentation portion 264.

Using these representations of conversation 110, rather than the entirety of the transcripts (i.e., prior streamed data 230, current streamed data 210, and following streamed data 250) with language model prompt 400 produces an immediate reduction in token count. This prevents the update processing from becoming too computationally expensive for language model 130. However, as described in relation to FIG. 3 below, two additional measures may be used in combination (or instead) to further reduce token count in language model prompt 400.

During prior iteration 204, when language model 130 processes language model prompt 400 with the combination of prior summary 232 and post-segmentation portion 244, it generates prior updated summary 234 as a new summary of prior streamed data 230 up through prior end point 246. During current iteration 202, when language model 130 processes language model prompt 400 with the combination of current summary 212 and post-segmentation portion 224, it generates current updated summary 214 as a new summary of current streamed data 210 up through current end point 226. During following iteration 206, when language model 130 processes language model prompt 400 with the combination of following summary 252 and post-segmentation portion 264, it generates following updated summary 254 as a new summary of following streamed data 250 up through following end point 266.

This scheme results in convenient relationships among the data products of the different iterations. Selecting current segmentation point 222 as prior end point 246 means that pre-segmentation portion 220 of current streamed data 210 is then actually prior streamed data 230. And selecting following segmentation point 262 as current end point 226 means that pre-segmentation portion 260 of following streamed data 250 is the same as current streamed data 210. This scheme allows for the chosen end point (e.g., prior end point 246 ) to be the reference point where the process resumes execution in the next iteration.

This means that current summary 212 may be copied from prior updated summary 234, and following summary 252 may be copied from current updated summary 214. So, in each iteration, as language model 130 generates an updated summary of conversation up through that point in time, it is also generating the summary that will be used (in the next iteration) to reduce the token count in its next incoming prompt.

FIG. 3 illustrates further detail for real-time conversation aid 300. Real-time conversation aid 300 has a timer 302 for scheduling the updates to contextual analysis product 116, which may be set to values such as 10 seconds or perhaps as long as a minute. In some examples, participants 102a and 102b may adjust timer 302 using a software control. When conversation 110 ends before timer 302 expires, timer 302 may be shortcut, in order to process an update upon the conclusion of conversation 110. Some examples of real-time conversation aid 300 use a secondary language model, such as language model 132, for support tasks, such as determining end times for transcript portions.

Real-time conversation aid 300 sends a prompt 308, which includes at least a portion of current streamed data 210 (e.g., at least a portion of post-segmentation portion 224) to language model 132, in order to extract current end point 226. Prompt 308 may instruct language model 132 to select current end point 226 such that post-segmentation portion 224 concludes with a compete sentence. That is, current end point 226 is between sentences. In some examples, prompt 308 may include portions of agenda 112 and instructions to select current end point 226 such that post-segmentation portion 224 concludes with a change in agenda items (i.e., perform a contextual comparison of post-segmentation portion 224 with agenda). This way, post-segmentation portion 224 may be aligned with a specific agenda item. Some examples do not use language model 132 to select any endpoints, such as current end point 226, but instead identify a period character in the transcript. In some examples, the very final word is not necessarily the end point, but instead the endpoint is a sentence or paragraph or similar end somewhere before that final word.

In addition to the use of summaries to reduce token count in language model prompt 400, some examples also use truncation of pre-segmentation portion 240 using a current sliding window 306. In such examples, prompt 308 may also include an instruction to select a current key point 326, which may be related to an agenda item on agenda 112 that had previously been marked as completed. A truncation function 304 applies current sliding window 306 to include post-segmentation portion 224 plus previous content (pre-segmentation portion 204) up to the last paragraph break or extended pause. This may improve performance by providing more relevant data related to the most recent parts of conversation 110. If truncation is used, this further reduces the token count of language model prompt 400. Truncation may be used with or without the summaries described in relation to FIG. 2.

In some examples, copy 324 of post-segmentation portion 224 (whether complete or truncated with current sliding window 306 ) and/or current summary 212 (which was held over from prior updated summary 234 of prior iteration 204) are provided to an encoding function 310 that further reduces the token count of language model prompt 400. In some examples, encoding function 310 removes article words ("a", "an", the") and/or whitespace from copy 324 of post-segmentation portion 224 and/or current summary 212. Some examples may go further and generate tokenized representations that are not in NL form (i.e., not human readable).

The results of applying encoding function 310 are shown as the reduced token count representation 212a of current summary 212, and reduced token count representation 324a of copy 324 of the post-segmentation portion 224. Some examples use these reduced token count representations 212a and 324a in place of current summary 212 and copy 324 of the post-segmentation portion 224 in language model prompt 400 (that is otherwise in NL). Some examples apply encoding function 310 to more (or all) of language model prompt 400. Any of the encoding, truncation, and use of the summaries (see FIG. 2) may be used alone or in combination with any of the other techniques.

A prompt generator 312, which may be classified as an APE, generates language model prompt 400, as shown in FIG. 4. Language model prompt 400 is sent to language model 130, which returns an update to contextual analysis product 116 as contextual analysis product update 114 and current updated summary 214. In some examples, a summary model 330 implements a summarization algorithm, and generates current updated summary 214 in place of language model 130. Current updated summary 214 is forwarded to user terminals 104a and 104b, as well as held for use as following summary 252 in following iteration 206. Contextual analysis product update 114 is provided to an updating function 314, to produce contextual analysis product 116, which is then sent to user terminals 104a and 104b.

FIG. 4 illustrates further detail for language model prompt 400. Language model prompt 400 has a system prompt 402 and a user prompt 404, with some exemplary language shown below. User prompt 404 includes (1) current summary 212 or reduced token count representation 212a of current summary 212, (2) copy 324 of post-segmentation portion 224 or reduced token count representation 324a of copy 324 of post-segmentation portion 224, (3) a copy 412 of agenda 112, (4) an instruction 414 to return contextual analysis product update 114, and (5) an instruction 416 to return current updated summary 214. Instruction 414 may indicate to use both of current summary 212 (or reduced token count representation 212a) and copy 324 of post-segmentation portion 224 (or reduced token count representation 324a).

Some examples use multiple levels of hierarchy, such that the oldest portion of conversation 110 is in the most highly summarized form (with the least detail), since it may generally be less relevant to the current topic. More recent portions of conversation 110 (prior to current segmentation point 222) are then summarized with an increasing level of detail as they reach the most recent portion. At some point, the oldest portions of conversation may be entirely discarded, based on either the time elapsed or relevance if the topics have changed substantially. This approach may be beneficial for longer conversations.

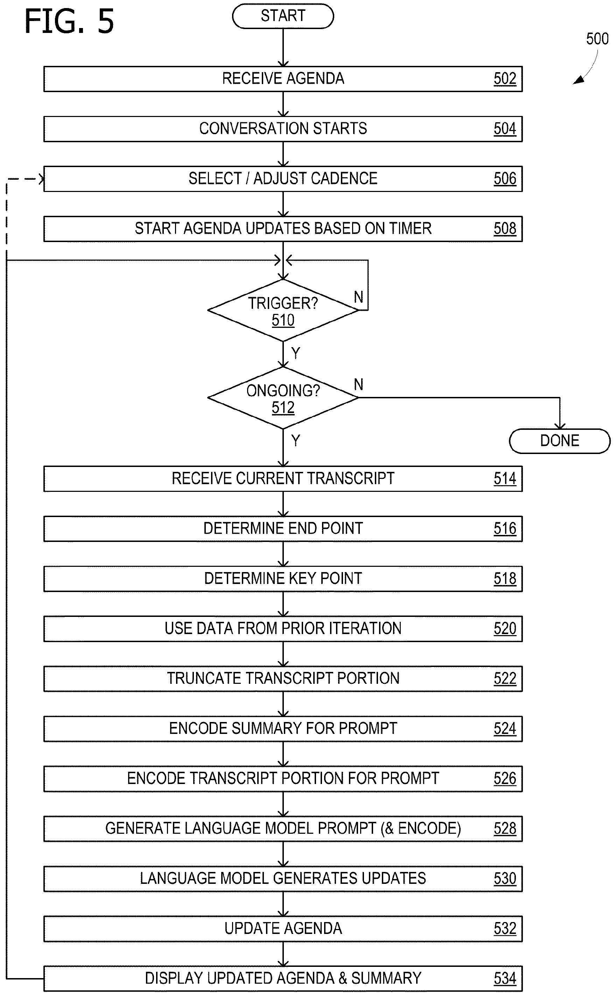

FIG. 5 shows a flowchart 500 illustrating exemplary operations that may be performed by architecture 100. In some examples, operations described for flowchart 500 are performed by computing device 600 of FIG. 6. Flowchart 500 commences with receiving agenda 112 for conversation 110, in operation 502, and conversation 110 starts in operation 504. A cadence for updating contextual analysis product 116 and/or current updated summary 214 is selected or adjusted in operation 506, driving the value of timer 302. In some examples, this is set by an application developer or a computer system administrator. However, in some examples, participants 102a and 102b may adjust timer 302 to be faster, potentially within a predefined range of acceptable values, if more frequent updates are required, or slower, if accuracy or another performance metric appears to be suffering. Timer 302 starts, or adjusts to its new setting, in operation 508.

Decision operation 510 determines whether it is time for an update, based on whether timer 302 has lapsed. If not, flowchart 500 waits. When timer 302 has lapsed, decision operation 512 determines whether conversation 110 had already ended. If so, flowchart 500 concludes. Otherwise, contextual analysis product 116 and/or current updated summary 214 are generated using operations 514-534. In some examples, if conversation 110 ends before timer 302 lapses (i.e., while waiting on decision operation 510), timer 302 may be shortcut, to permit one more pass through the remainder of flowchart 500 upon the conclusion of conversation 110. Then flowchart concludes, after the final pass.

Real-time conversation aid 300 receives current streamed data 210 of conversation 110 in operation 514. Language model 132 identifies current end point 226 of current streamed data 210 (or an ending point for post-segmentation portion 224, which is the same point), in operation 516. In operation 518, language model 132 determines current key point 326 within current streamed data 210 (if current key point 326 is used). In some examples, operations 516 and 518 are combined into a single operation, controlled via prompt 308.

Operation 520 uses data from prior iteration 204 of a cycle of the process to set current segmentation point 222 in current streamed data 210 to prior end point 246 of prior streamed data 230 and to set current summary 212 of pre-segmentation portion 220 to prior updated summary 234. In the next pass of flowchart 500, the current data becomes the prior data. For example, during following iteration 206 of a cycle of the process, current end point 226 of current streamed data 210 will become following segmentation point 262 and current updated summary 214 will become following summary 252 of pre-segmentation portion 220.

Operation 522 truncates copy 324 of post-segmentation portion 224 according to current sliding window 306 for examples that use current key point 326 and current sliding window 306. For examples that use encoding, operation 524 encodes current summary 212 into reduced token count representation 212a of current summary 212, and operation 526 encodes copy 324 of post-segmentation portion 224 into reduced token count representation 324a of copy 324 of post-segmentation portion 224. Alternatively, the entirety of language model prompt 400 is encoded as part of the following operation 528.

Language model prompt 400 is generated in operation 528 for language model 130. In operation 530, language model 130 uses language model prompt 400 to generate contextual analysis product update 114 and current updated summary 214. Some examples use summary model to generate current updated summary 214. Operation 532 updates contextual analysis product 116 using the returned contextual analysis product update 114. Operation 534 displays contextual analysis product 116 and/or current updated summary 214 on user terminal 104a and/or user terminal 104b. Flowchart 500 then returns to decision operation 510, or operation 506 to permit adjustment of the cadence.

### Additional Examples

An example system comprises: a processor; and a computer-readable medium storing instructions that are operative upon execution by the processor to: on a scheduled cadence: receive a current streamed data of a conversation; identify a current end point of the current streamed data; determine a current segmentation point in the current streamed data, wherein the current segmentation point segments the current streamed data into a pre-segmentation portion and a post-segmentation portion, wherein the pre-segmentation portion comprises the current streamed data prior to the current segmentation point and the post-segmentation portion comprises the current streamed data following the current segmentation point up through the current end point; generate a language model prompt for a language model, wherein the language model prompt comprises: a current summary of the pre-segmentation portion, a copy of the post-segmentation portion, an instruction to return an update to a contextual analysis product, and an instruction to return a current updated summary of the conversation using both the current summary of the pre-segmentation portion and the copy of the post-segmentation portion; and update the contextual analysis product using the returned update to the contextual analysis product or display the current updated summary; wherein the current segmentation point in the current streamed data comprises a prior end point of a prior streamed data from a prior iteration of updating the contextual analysis product, and the current summary of the pre-segmentation portion comprises a prior updated summary from the prior iteration of updating the contextual analysis product; and wherein in a following iteration of updating the contextual analysis product, the current end point of the current streamed data becomes a following segmentation point and the current updated summary becomes a following summary of the pre-segmentation portion.

An example computer-implemented method comprises: on a scheduled cadence: receiving a current streamed data of a conversation; identifying a current end point of the current streamed data; determining a current segmentation point in the current streamed data, wherein the current segmentation point segments the current streamed data into a pre-segmentation portion and a post-segmentation portion, wherein the pre-segmentation portion comprises the current streamed data prior to the current segmentation point and the post-segmentation portion comprises the current streamed data following the current segmentation point up through the current end point; generating a language model prompt for a language model, wherein the language model prompt comprises: a current summary of the pre-segmentation portion, a copy of the post-segmentation portion, an instruction to return an update to a contextual analysis product, and an instruction to return a current updated summary of the conversation using both the current summary of the pre-segmentation portion and the copy of the post-segmentation portion; and updating the contextual analysis product using the returned update to the contextual analysis product or displaying the current updated summary; wherein the current segmentation point in the current streamed data comprises a prior end point of a prior streamed data from a prior iteration of updating the contextual analysis product, and the current summary of the pre-segmentation portion comprises a prior updated summary from the prior iteration of updating the contextual analysis product; and wherein in a following iteration of updating the contextual analysis product, the current end point of the current streamed data becomes a following segmentation point and the current updated summary becomes a following summary of the pre-segmentation portion.

One or more example computer storage devices have computer-executable instructions stored thereon, which, on execution by a computer, cause the computer to perform operations comprising: on a scheduled cadence: receiving a current streamed data of a conversation; identifying a current end point of the current streamed data; determining a current segmentation point in the current streamed data, wherein the current segmentation point segments the current streamed data into a pre-segmentation portion and a post-segmentation portion, wherein the pre-segmentation portion comprises the current streamed data prior to the current segmentation point and the post-segmentation portion comprises the current streamed data following the current segmentation point up through the current end point; generating a language model prompt for a language model, wherein the language model prompt comprises: a current summary of the pre-segmentation portion, a copy of the post-segmentation portion, an instruction to return an update to a contextual analysis product, and an instruction to return a current updated summary of the conversation using both the current summary of the pre-segmentation portion and the copy of the post-segmentation portion; and updating the contextual analysis product using the returned update to the contextual analysis product or displaying the current updated summary; wherein the current segmentation point in the current streamed data comprises a prior end point of a prior streamed data from a prior iteration of updating the contextual analysis product, and the current summary of the pre-segmentation portion comprises a prior updated summary from the prior iteration of updating the contextual analysis product; and wherein in a following iteration of updating the contextual analysis product, the current end point of the current streamed data becomes a following segmentation point and the current updated summary becomes a following summary of the pre-segmentation portion.

Alternatively, or in addition to the other examples described herein, examples include any combination of the following:
- the streamed data comprises a partial or complete transcript;
- displaying the current updated summary;
- encoding, in the language model prompt, the current summary into a reduced token count representation;
- encoding the copy of the post-segmentation portion into a reduced token count representation;
- determining a current key point within the current streamed data;
- the conversation comprises an audio conversation, a video or video conversation, or a textual conversation;
- the language model comprises at least one of a LLM, a SLM, a MLM, or generative AI model;
- the language model prompt further comprises a copy of an agenda, and wherein the contextual analysis product comprises an updated version of the agenda;
- the encoding results in a tokenized representation not in an NL form;
- the audio conversation comprises a teleconference;
- the video conversation comprises a video conference;
- the textual conversation comprises a real-time chat session; and
- the encoding comprises removing article words and/or whitespace.

While the aspects of the disclosure have been described in terms of various examples with their associated operations, a person skilled in the art would appreciate that a combination of operations from any number of different examples is also within scope of the aspects of the disclosure.

### Example Operating Environment

FIG. 6 is a block diagram of an example computing device 600 (e.g., a computer storage device) for implementing aspects disclosed herein, and is designated generally as computing device 600. In some examples, one or more computing devices 600 are provided for an on-premises computing solution. In some examples, one or more computing devices 600 are provided as a cloud computing solution. In some examples, a combination of on-premises and cloud computing solutions are used. Computing device 600 is but one example of a suitable computing environment and is not intended to suggest any limitation as to the scope of use or functionality of the examples disclosed herein, whether used singly or as part of a larger set.

Neither should computing device 600 be interpreted as having any dependency or requirement relating to any one or combination of components/modules illustrated. The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 600 includes a bus 610 that directly or indirectly couples the following devices: computer storage memory 612 (i.e., a computer-readable medium), one or more processors 614, one or more presentation components 616, input/output (I/O) ports 616, I/O components 620, a power supply 622, and a network component 624. While computing device 600 is depicted as a seemingly single device, multiple computing devices 600 may work together and share the depicted device resources. For example, memory 612 may be distributed across multiple devices, and processor(s) 614 may be housed within different devices.

Bus 610 represents what may be one or more buses (such as an address bus, data bus, or a combination thereof). Although the various blocks of FIG. 6 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 6 and the references herein to a "computing device." Memory 612 may take the form of the computer storage media referenced below and operatively provide storage of computer-readable instructions, data structures, program modules and other data for the computing device 600. In some examples, memory 612 stores one or more of an operating system, a universal application platform, or other program modules and program data. Memory 612 is thus able to store and access data 612a and instructions 612b that are executable by processor 614 and configured to carry out the various operations disclosed herein. Thus, computing device 600 comprises a computer storage device having computer-executable instructions 612b stored thereon.

In some examples, memory 612 includes computer storage media. Memory 612 may include any quantity of memory associated with or accessible by the computing device 600. Memory 612 may be internal to the computing device 600 (as shown in FIG. 6), external to the computing device 600 (not shown), or both (not shown). Additionally, or alternatively, the memory 612 may be distributed across multiple computing devices 600, for example, in a virtualized environment in which instruction processing is carried out on multiple computing devices 600. For the purposes of this disclosure, "computer storage media," "computer storage memory," "memory," and "memory devices" are synonymous terms for the memory 612, and none of these terms include carrier waves or propagating signaling.

Processor(s) 614 may include any quantity of processing units that read data from various entities, such as memory 612 or I/O components 620. Specifically, processor(s) 614 are programmed to execute computer-executable instructions for implementing aspects of the disclosure. The instructions may be performed by the processor, by multiple processors within the computing device 600, or by a processor external to the client computing device 600. In some examples, the processor(s) 614 are programmed to execute instructions such as those illustrated in the flow charts discussed below and depicted in the accompanying drawings. Moreover, in some examples, the processor(s) 614 represents an implementation of analog techniques to perform the operations described herein. For example, the operations may be performed by an analog client computing device 600 and/or a digital client computing device 600. Presentation component(s) 616 present data indications to a user or other device. Exemplary presentation components include a display device, speaker, printing component, vibrating component, etc. One skilled in the art will understand and appreciate that computer data may be presented in a number of ways, such as visually in a graphical user interface (GUI), audibly through speakers, wirelessly between computing devices 600, across a wired connection, or in other ways. I/O ports 618 allow computing device 600 to be logically coupled to other devices including I/O components 620, some of which may be built in. Example I/O components 620 include, for example but without limitation, a microphone, joystick, game pad, satellite dish, scanner, printer, wireless device, etc.

Computing device 600 may operate in a networked environment via the network component 624 using logical connections to one or more remote computers. In some examples, the network component 624 includes a network interface card and/or computer-executable instructions (e.g., a driver) for operating the network interface card. Communication between the computing device 600 and other devices may occur using any protocol or mechanism over any wired or wireless connection. In some examples, network component 624 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 624 communicates over wireless communication link 626 and/or a wired communication link 626a to a remote resource 628 (e.g., a cloud resource) across a computer network 630. Various different examples of communication links 626 and 626a include a wireless connection, a wired connection, and/or a dedicated link, and in some examples, at least a portion is routed through the internet.

Although described in connection with an example computing device 600, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic devices, and the like. Such systems or devices may accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A system comprising:
a processor (614); and
a computer-readable medium storing instructions that are operative upon execution by the processor (614) to:
on a scheduled cadence:
receive current streamed data (210) of a conversation (110);
identify a current end point of the current streamed data (210);
determine a current segmentation point in the current streamed data (210), wherein the current segmentation point segments the current streamed data (210) into a pre-segmentation portion and a post-segmentation portion, wherein the pre-segmentation portion comprises the current streamed data (210) prior to the current segmentation point and the post-segmentation portion comprises the current streamed data (210) following the current segmentation point up through the current end point;
generate a language model prompt (400) for a language model (130),
wherein the language model prompt (400) comprises:
a current summary of the pre-segmentation portion,
a copy of the post-segmentation portion,
an instruction to return an update to a contextual analysis product, and
an instruction to return a current updated summary of the conversation using both the current summary of the pre-segmentation portion and the copy of the post-segmentation portion; and
update the contextual analysis product using the returned update to the contextual analysis product;
wherein the current segmentation point in the current streamed data (210) comprises a prior end point of a prior streamed data from a prior iteration of updating the contextual analysis product, and the current summary of the pre-segmentation portion comprises a prior updated summary from the prior iteration of updating the contextual analysis product; and
wherein in a following iteration of updating the contextual analysis product, the current end point of the current streamed data (210) becomes a following segmentation point and the current updated summary becomes a following summary of the pre-segmentation portion.

2. The system of claim 1, wherein the streamed data (210) comprises a transcript.

3. The system of claim 1, wherein the instructions are further operative to:
display the current updated summary.

4. The system of claim 1, wherein the instructions are further operative to:
encode, in the language model prompt, the current summary into a reduced token count representation and/or the copy of the post-segmentation portion into the reduced token count representation.

5. The system of claim 1, wherein the language model prompt further comprises a copy of an agenda, and wherein the contextual analysis product comprises an updated version of the agenda.

6. The system of claim 1, wherein the conversation comprises an audio conversation, a video conversation, a video, or a textual conversation, and wherein the language model comprises a large language model (LLM), a small language model (SLM), a multimodal language model (MLM), or generative artificial intelligence (AI).

7. A method comprising:
on a scheduled cadence:
receiving current streamed data (210) of a conversation (110);
identifying a current end point of the current streamed data (210);
determining a current segmentation point in the current streamed data (210), wherein the current segmentation point segments the current streamed data (210) into a pre-segmentation portion and a post-segmentation portion, wherein the pre-segmentation portion comprises the current streamed data (210) prior to the current segmentation point and the post-segmentation portion comprises the current streamed data (210) following the current segmentation point up through the current end point;
generating a language model prompt (400) for a language model (130), wherein the language model prompt (400) comprises:
a current summary of the pre-segmentation portion,
a copy of the post-segmentation portion,
an instruction to return an update to a contextual analysis product, and
an instruction to return a current updated summary of the conversation using both the current summary of the pre-segmentation portion and the copy of the post-segmentation portion; and
updating the contextual analysis product using the returned update to the contextual analysis product;
wherein the current segmentation point in the current streamed data (210) comprises a prior end point of a prior streamed data from a prior iteration of updating the contextual analysis product, and the current summary of the pre-segmentation portion comprises a prior updated summary from the prior iteration of updating the contextual analysis product; and
wherein in a following iteration of updating the contextual analysis product, the current end point of the current streamed data (210) becomes a following segmentation point and the current updated summary becomes a following summary of the pre-segmentation portion.

8. The method of claim 7, wherein the streamed data comprises a transcript.

9. The method of claim 7, further comprising:
displaying the current updated summary.

10. The method of claim 7, further comprising:
encoding, in the language model prompt, the current summary into a reduced token count representation and/or the copy of the post-segmentation portion into the reduced token count representation.

11. The method of claim 10,
wherein the language model comprises a large language model (LLM), a small language model (SLM), a multimodal language model (MLM), or generative artificial intelligence (AI);
and/or wherein the encoding results in a tokenized representation not in a natural language (NL) form.

12. The method of claim 7, wherein the language model prompt further comprises a copy of an agenda, and wherein the contextual analysis product comprises an updated version of the agenda.

13. The method of claim 7, wherein the conversation comprises an audio conversation, a video conversation, a video, or a textual conversation.

14. The method of claim 7, further comprising:
adjusting the cadence of updating the contextual analysis product.

15. A computer storage device having computer-executable instructions stored thereon, which, on execution by a computer, cause the computer to perform operations comprising:
on a scheduled cadence:
receiving a current streamed data (210) of a conversation (110);
identifying a current end point of the current streamed data (210);
determining a current segmentation point in the current streamed data (210), wherein the current segmentation point segments the current streamed data (210) into a pre-segmentation portion and a post-segmentation portion, wherein the pre-segmentation portion comprises the current streamed data (210) prior to the current segmentation point and the post-segmentation portion comprises the current streamed data (210) following the current segmentation point up through the current end point;
generating a language model prompt (400) for a language model (130), wherein the language model prompt (400) comprises:
a current summary of the pre-segmentation portion,
a copy of the post-segmentation portion,
an instruction to return an update to a contextual analysis product, and
an instruction to return a current updated summary of the conversation using both the current summary of the pre-segmentation portion and the copy of the post-segmentation portion; and
updating the contextual analysis product using the returned update to the contextual analysis product;
wherein the current segmentation point in the current streamed data (210) comprises a prior end point of a prior streamed data from a prior iteration of updating the contextual analysis product, and the current summary of the pre-segmentation portion comprises a prior updated summary from the prior iteration of updating the contextual analysis product; and
wherein in a following iteration of updating the contextual analysis product, the current end point of the current streamed data (210) becomes a following segmentation point and the current updated summary becomes a following summary of the pre-segmentation portion.
